# DEMANDE DE BREVET EUROPEEN

(11) **EP 4 201 500 A1**
(43) Date de publication de la demande: **28.06.2023**
(21) Numéro de dépôt: 21315297.8
(22) Date de dépôt: 24.12.2021
(51) Int. Cl.: B01D 19/00

(54) **DÉGAZEUR ET SYSTÈME DE MESURE POUR UN LIQUIDE CONTENANT DU GAZ**

(71) Demandeur: Endress et Hauser, 68330 Huninge (FR)
(72) Inventeur: GRINON, Raphaël, 68720 Zillisheim (FR); DREYER, Frédéric, 13330 Pélissanne (FR); GABRIEL, Nicolas, 68000 Comar (FR); BITOUN, Frédéric, 69400 Limas (FR)
(74) Mandataire: Rehn, Simon

(57) **Abrégé**

L'invention concerne un dégazeur (100) pour un liquide contenant des gaz, comprenant :
- une cuve étanche aux gaz (110) qui s'étend le long d'un axe (A1),
dans lequel la cuve (110) comprend une partie supérieure (111) de cuve et une partie (112) inférieure de cuve,
dans lequel une entrée de fluide (113) ainsi qu'une vanne de purge (115) sont disposées dans la partie supérieure de la cuve (111) et une sortie de fluide (114) est disposée dans la partie inférieure (112) de la cuve,
de sorte qu'un liquide est adapté pour s'écouler de l'entrée de fluide (113) à la sortie de fluide (114) à travers la cuve (110) et qu'un gaz présent dans le liquide est adapté pour être évacué de la cuve (110).par la vanne de purge (115),
dans lequel un premier capteur de niveau (120) est disposé dans la cuve (110),
une unité de contrôle (130) reliée à la vanne de purge (115) et au premier capteur de niveau (120) pour commander la vanne de purge (115) en fonction du niveau de liquide dans la cuve (110).

## Description

La présente invention concerne un dégazeur et un système de mesure pour un liquide contenant du gaz.

Dans le domaine de la fabrication d'alcool, il est nécessaire de quantifier le taux d'alcool afin de pouvoir déterminer la taxe correspondante. Pendant la mesure du liquide, c'est-à-dire du mélange hydroalcoolique, il est important de mesurer un liquide sans gaz. A cet effet, un dégazeur fait partie du dispositif de mesure.

Actuellement, les dégazeurs comportent une soupape mécanique permettant de faire échapper le gaz du dégazeur. La soupape possède un flotteur qui empêche le débordement du liquide à travers de la soupape en fonctionnement normal (sans présence de gaz). Les caractéristiques techniques du flotteur (poids et autres) sont adaptées en fonction du liquide à dégazer. Chaque liquide nécessite donc un flotteur spécifique, ce qui est couteux pour l'utilisateur.

L'un des buts de l'invention est de proposer un dégazeur permettant un fonctionnement fiable et efficace tout en permettant une utilisation du dégazeur pour une multitude de liquides.

A cet effet, l'invention a pour objet un dégazeur pour un liquide contenant des gaz selon la revendication 1.

Le dégazeur selon l'invention peut comprendre l'une ou plusieurs des caractéristiques suivantes, prise(s) isolément ou selon toute(s) combinaison(s) techniquement possible(s) :
- une cuve étanche aux gaz qui s'étend le long d'un axe,

dans lequel la cuve comprend une partie supérieure de cuve et une partie inférieure de cuve,
dans lequel une entrée de fluide ainsi qu'une vanne de purge sont disposées dans la partie supérieure de la cuve et une sortie de fluide est disposée dans la partie inférieure de la cuve,
de sorte qu'un liquide est adapté pour s'écouler de l'entrée de fluide à la sortie de fluide à travers la cuve et qu'un gaz présent dans le liquide est adapté pour être évacué de la cuve par la vanne de purge,
dans lequel un premier capteur de niveau est disposé dans la cuve,
une unité de contrôle reliée à la vanne de purge et au premier capteur de niveau pour commander la vanne de purge en fonction du niveau de liquide dans la cuve.

Le dégazeur permet un dégazage facile et efficace d'un liquide contenant des gaz. Le dégazeur peut être utilisé pour tout liquide. Le dégazeur offre donc une grande liberté à son utilisateur.

Selon une variante de l'invention la cuve présente une forme de section transversale ronde par rapport à l'axe et que l'entrée de fluide et la sortie de fluide sont disposées chacune tangentiellement à la cuve, de sorte qu'un liquide entrant dans la cuve peut être conduit en forme de tourbillon de l'entrée de fluide à la sortie de fluide.

Selon une variante de l'invention la cuve présente deux capteurs de niveau, le premier capteur de niveau étant disposé dans la zone supérieure de la cuve de telle sorte que le premier capteur de niveau est adapté pour détecter un niveau de remplissage de 80 % du liquide dans la cuve et que le deuxième capteur de niveau est adapté pour détecter un niveau de remplissage de 10 % du liquide dans la cuve.

Selon une variante de l'invention la vanne de purge est une électrovanne.

Selon une variante de l'invention la cuve est fabriquée en acier inoxydable.

Le problème susmentionné est également résolu par un système de mesure pour un liquide contenant du gaz selon la revendication 6.

Le système de mesure selon l'invention peut comprendre l'une ou plusieurs des caractéristiques suivantes, prise(s) isolément ou selon toute(s) combinaison(s) techniquement possible(s) :
- une entrée de système de mesure, une sortie de système de mesure,
- un dégazeur selon l'une quelconque des revendications précédentes,
- un module de compteur de volume comprenant un premier compteur de volume, une entrée de compteur et une sortie de compteur,
dans lequel l'entrée de système de mesure est reliée à l'entrée de fluide de la cuve du dégazeur et l'entrée de compteur du module de compteur de volume est reliée à la sortie de fluide de la cuve du dégazeur et la sortie de compteur du module de compteur de volume est reliée à la sortie de système de mesure.

Selon une variante de l'invention le module de comptage de volume comprend un capteur de température et un capteur de pression étant tous les deux reliés au premier compteur de volume.

Selon une variante de l'invention le module de compteur de volume comprend en outre un deuxième compteur de volume, le premier compteur de volume étant adapté pour mesurer un liquide sur une première plage de mesure et le deuxième compteur de volume étant adapté pour mesurer un liquide sur une deuxième plage de mesure.

Selon une variante de l'invention le module de compteur de volume comprend une unité d'affichage étant adaptée pour fournir une valeur de mesure déterminée par le module de compteur de volume.

Selon une variante de l'invention le système de mesure comprend une structure porteuse qui est reliée mécaniquement à au moins le dégazeur.

La présente invention sera mieux comprise à la lecture de la description qui va suivre, donnée uniquement à titre d'exemple, et faite en se référant aux dessins annexés, sur lesquels on peut voir :
- Fig. 1 : une représentation en perspective du système de mesure selon l'invention,
- Fig. 2 : une vue détaillée du dégazeur du système de mesure selon l'invention,
- Fig. 3 : une vue latérale du système de mesure représenté sur la figure 1.

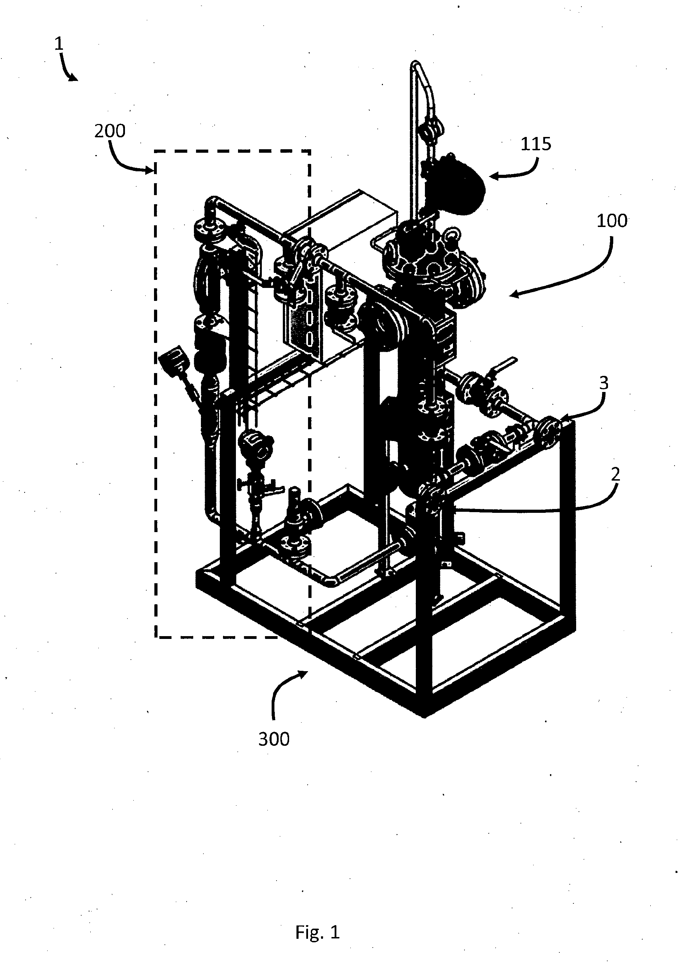

La figure 1 montre un mode de réalisation du système de mesure 1 selon l'invention avec une entrée 2 du système de mesure, une sortie 3 du système de mesure, un dégazeur 100, un module de compteur de volume 200 et une structure porteuse 300.

L'entrée 2 du système de mesure est adaptée pour être connectée à une source de liquide. La source de liquide est par exemple un réservoir contenant un liquide alcoolisé ou un autre liquide contenant du gaz. La sortie 3 du système de mesure est conçue pour être connectée à un récepteur de liquide. Le récepteur de liquide est par exemple un camion-citerne.

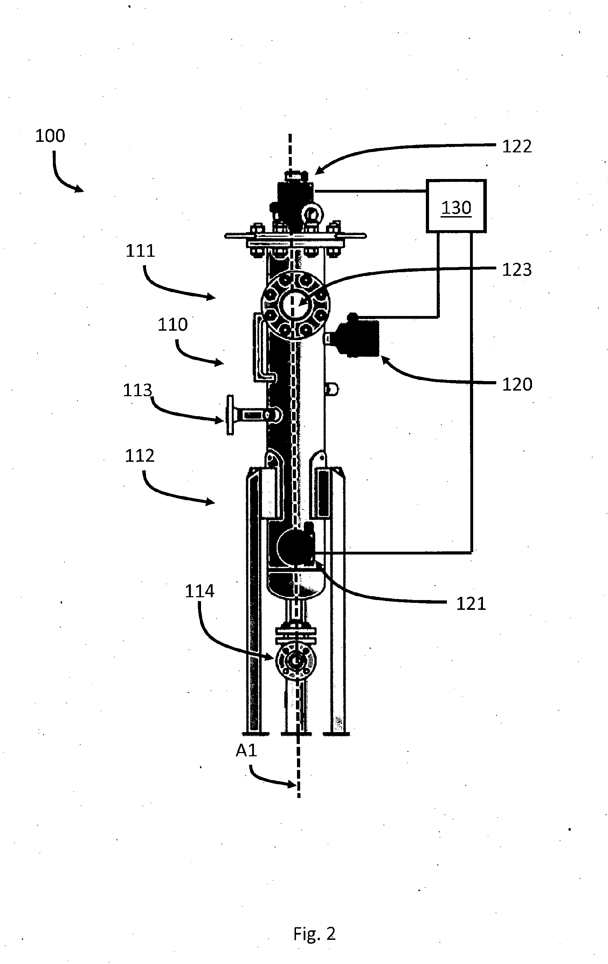

La figure 2 montre une vue détaillée du dégazeur 100. Le dégazeur 100 comporte une cuve 100 étanche aux gaz, un premier capteur de niveau 120 et une unité de contrôle 130. Le dégazeur 100 est adapté pour dégazer un liquide contenant du gaz. Le liquide contenant des gaz est par exemple un mélange d'alcool et d'air.

La cuve 110 s'étend le long d'un axe A1. La cuve 110 présente une partie supérieure de la cuve 111 et une partie inférieure de la cuve 112. Une entrée de cuve 113 ainsi qu'une vanne de purge 115 sont disposées dans la zone supérieure de la cuve 111. Une sortie de cuve 114 est disposée dans la zone inférieure 112 de la cuve. L'entrée de cuve 113 et la sortie de cuve 114 sont agencées de telle sorte qu'un liquide puisse s'écouler à travers la cuve 110 depuis l'entrée de cuve 113 jusqu'à la sortie de cuve 114, évacuant ainsi dans la cuve 110 un gaz présent dans le liquide. La vanne de purge 115 est adaptée pour évacuer de la cuve 110 le gaz présent dans la cuve 110.

La cuve 110 présente de préférence une forme de section transversale arrondie par rapport à l'axe A1, c'est-à-dire par exemple une forme circulaire, une forme elliptique ou une autre forme pour un écoulement optimale d'un fluide. L'entrée de cuve 113 et la sortie de cuve 114 sont de préférence disposées chacune tangentiellement à une paroi de la cuve 110, de sorte que le liquide entrant dans la cuve 110 peut être conduit en forme de tourbillon de l'entrée de cuve 113 à la sortie de cuve 114. En d'autres termes, l'entrée de cuve 113 et la sortie de cuve 114 sont disposées de manière à ce que le liquide entre et sorte de la cuve 110 avec un écoulement optimal, c'est-à-dire avec un minimum de tourbillons. Ainsi, le liquide est pressé contre une paroi de la cuve 110 à l'aide de la force centrifuge lors de son passage dans la cuve, ce qui a pour conséquence que les gaz présents dans le liquide s'échappent du liquide. Les gaz qui se sont échappés du liquide s'accumulent dans la partie supérieure 111 de la cuve 110.

La cuve 110 est de préférence fabriquée en acier inoxydable ou dans un autre matériau hygiénique.

Le premier capteur de niveau 120 est raccordé à l'unité de contrôle 130 qui commande la vanne de purge 115. La vanne de purge 115 est par exemple une électrovanne.

La vanne de purge 115 est ouverte par l'unité de contrôle 130 en fonction du niveau de remplissage dans la cuve 110. La vanne de purge 115 est ouverte par l'unité de contrôle 130, par exemple, lorsque le premier capteur de niveau 120 détecte une absence de liquide se trouvant dans la cuve 110. Un premier seuil de gaz est alors atteint et la vanne de purge 115 est commandé pour s'ouvrir. Le premier capteur de niveau 120 est de préférence placé dans la partie supérieure 111 de la cuve à proximité de l'entrée 113 de cuve. Le premier capteur de niveau 120 est disposé dans la zone supérieure de la cuve 111 de telle sorte qu'il est apte à détecter un niveau de remplissage d'environ 80 % du liquide dans la cuve 110. Le premier capteur de niveau 120 est de préférence une sonde de niveau vibronique.

Selon un mode de réalisation, au moins deux capteurs de niveau sont disposés dans la cuve 110. Le deuxième capteur de niveau 121 est de préférence disposé dans la zone inférieure 112 de la cuve. Le deuxième capteur de niveau 121 est de préférence disposé de manière à ce que le deuxième capteur de niveau 121 soit apte à détecter un niveau de remplissage d'environ 10 % du liquide dans la cuve 110. Si le deuxième capteur de niveau 121 détecte un gaz au lieu d'un liquide, une anomalie doit exister au niveau de l'approvisionnement du liquide.

Selon un mode de réalisation, au moins trois capteurs de niveau sont disposés dans la cuve 110. Le troisième capteur de niveau 122 est de préférence disposé dans la zone supérieure 112 de la cuve, à proximité de la vanne de purge 115.

Grâce au troisième capteur de niveau 122 il est possible de vérifier une condition de transfert du fluide à mesurer par le système de mesure 1. Selon un mode de réalisation, un hublot 123 est agencé au droit du troisième capteur de niveau 122 permettant ainsi un control visuel à l'utilisateur lors d'une mesure d'un liquide par le système de mesure. Lors d'une utilisation du dégazeur 100, le troisième capteur de niveau 122 est idéalement immergé dans le liquide à dégazer.

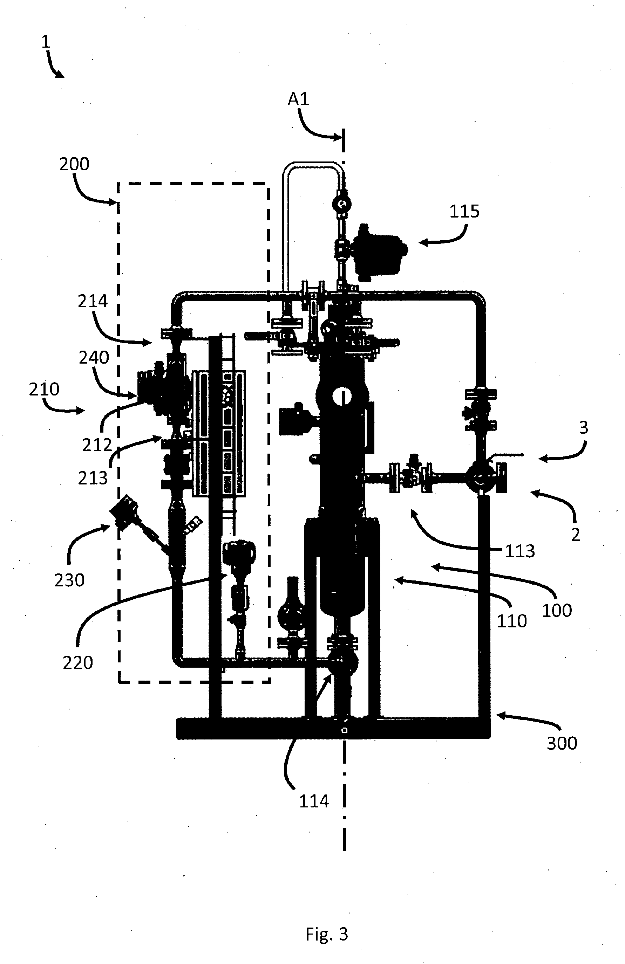

La figure 3 montre le module de comptage de volume 200 avec un premier compteur de volume 210, une entrée de compteur 213 et une sortie de compteur 214. L'entrée 2 du système de mesure est reliée à l'entrée de cuve 113 de la cuve 110 du dégazeur 100. L'entrée de comptage 213 du module de comptage de volume 200 est reliée à la sortie de cuve 114 de la cuve 110 du dégazeur 100 et la sortie de comptage 214 du module de comptage de volume 200 est reliée à la sortie 3 du système de mesure (voir également figure 1). Le module de comptage de volume 200 comprend une unité de calcul 212 pour traiter les données de mesure du module de comptage de volume 200. Le premier compteur de volume 210 est adapté pour mesurer un liquide sur une première plage de mesure.

Le premier compteur de volume 210 est un débitmètre Coriolis, par exemple du type Promass Q ou Promass F. Le débitmètre Coriolis permet de déterminer le débit volumique, le débit massique et la masse volumique du liquide.

Le module de comptage de volume 200 comprend de préférence également une unité d'affichage 240. L'unité d'affichage 240 est adaptée pour afficher une valeur de mesure déterminée par le module de comptage de volume 200.

Le module de comptage de volume 200 comporte de préférence un capteur de température 220. Le capteur de température 220 est disposé pour être en contact avec le liquide qui traverse le système de mesure 1. Le capteur de température 220 est de préférence relié électriquement à l'unité de calcul 212 du premier compteur de volume 210. Le capteur de température 220 est installé de préférence avec une distance inférieure à un mètre en amont ou en aval du premier compteur de volume 210.

Le module de comptage de volume 200 comporte de préférence un capteur de pression 230. Le capteur de pression 230 est disposé pour être en contact avec le liquide qui traverse le système de mesure 1. Le capteur de pression 230 est de préférence relié électriquement à l'unité de calcul 212 du premier compteur de volume 210. Le capteur de pression 230 est installé de préférence avec une distance inférieure à un mètre en amont ou en aval du premier compteur de volume 210.

Selon un mode de réalisation non représenté, le module de comptage de volume 200 comporte en outre un deuxième compteur de volume 211. Le deuxième compteur de volume 211 est apte à mesurer un liquide sur une deuxième plage de mesure. De préférence, la deuxième plage de mesure du deuxième compteur de volume 211 est différente ou complémentaire de la première plage de mesure du premier compteur de volume 210. Le deuxième compteur de volume 211 est aussi un débitmètre Coriolis, par exemple du type Promass F ou Promass Q.

Tous les composants du système de mesure 1 véhiculant des liquides sont de préférence reliés entre eux par un système de tuyauterie. Ainsi, il y a par exemple un tronçon de tuyau entre l'entrée 2 du système de mesure et l'entrée 113 de la cuve, entre la sortie 114 de la cuve et une entrée 213 du premier compteur de masse 210, entre une sortie 214 du premier compteur de masse 210 et la sortie 3 du système de mesure. Le système de tuyaux est idéalement en acier inoxydable.

Comme illustré à la figure 3, le système de mesure 1 présente de préférence une structure porteuse 300 qui est reliée mécaniquement à au moins le dégazeur 100.

### Liste des références

- 1: système de mesure
- 2: entrée du système de mesure
- 3: sortie du système de mesure
- 100: dégazeur
- 110: cuve
- 111: partie supérieure de la cuve
- 112: partie inférieure de la cuve
- 113: entrée de cuve
- 114: sortie de cuve
- 115: vanne de purge
- 120: premier capteur de niveau
- 121: deuxième capteur de niveau
- 122: troisième capteur de niveau
- 123: hublot
- 130: unité de contrôle
- 200: module de comptage de volume
- 210: premier compteur de volume
- 211: deuxième compteur de volume
- 213: entrée de compteur
- 214: sortie de compteur
- 220: capteur de température
- 230: capteur de pression
- 240: unité d'affichage
- 300: structure porteuse
- A1: axe

## Revendications

1. Dégazeur (100) pour un liquide contenant des gaz, comprenant :
- une cuve étanche aux gaz (110) qui s'étend le long d'un axe (A1),
dans lequel la cuve (110) comprend une partie supérieure (111) de cuve et une partie (112) inférieure de cuve,
dans lequel une entrée de fluide (113) ainsi qu'une vanne de purge (115) sont disposées dans la partie supérieure de la cuve (111) et une sortie de fluide (114) est disposée dans la partie inférieure (112) de la cuve,
de sorte qu'un liquide est adapté pour s'écouler de l'entrée de fluide (113) à la sortie de fluide (114) à travers la cuve (110) et qu'un gaz présent dans le liquide est adapté pour être évacué de la cuve (110) par la vanne de purge (115),
dans lequel un premier capteur de niveau (120) est disposé dans la cuve (110),
une unité de contrôle (130) reliée à la vanne de purge (115) et au premier capteur de niveau (120) pour commander la vanne de purge (115) en fonction du niveau de liquide dans la cuve (110).

2. Dégazeur (100) selon la revendication 1, dans lequel la cuve (110) présente une forme de section transversale ronde par rapport à l'axe (A1) et que l'entrée de fluide (113) et la sortie de fluide (114) sont disposées chacune tangentiellement à la cuve (110), de sorte qu'un liquide entrant dans la cuve (110) peut être conduit en forme de tourbillon de l'entrée de fluide (113) à la sortie de fluide (114).

3. Dégazeur (100) selon la revendication 1 ou 2, dans lequel la cuve (110) présente deux capteurs de niveau (120, 121), le premier capteur de niveau (120) étant disposé dans la zone supérieure de la cuve (111) de telle sorte que le premier capteur de niveau (120) est adapté pour détecter un niveau de remplissage de 80 % du liquide dans la cuve (110) et que le deuxième capteur de niveau (121) est adapté pour détecter un niveau de remplissage de 10 % du liquide dans la cuve.

4. Dégazeur (100) selon l'une quelconque des revendications précédentes, dans lequel la vanne de purge (115) est une électrovanne.

5. Dégazeur (100) selon l'une des revendications précédentes, dans lequel la cuve (110) est fabriquée en acier inoxydable.

6. Système de mesure (1) pour un liquide contenant du gaz comprenant
- une entrée (2) de système de mesure, une sortie (3) de système de mesure,
- un dégazeur (100) selon l'une quelconque des revendications précédentes,
- un module de compteur de volume (200) comprenant un premier compteur de volume (210), une entrée de compteur (213) et une sortie de compteur (214),
dans lequel l'entrée (2) de système de mesure est reliée à l'entrée de fluide (113) de la cuve (110) du dégazeur (100) et l'entrée de compteur (213) du module de compteur de volume (200) est reliée à la sortie de fluide (114) de la cuve (110) du dégazeur (100) et la sortie de compteur (214) du module de compteur de volume (200) est reliée à la sortie de système de mesure (3).

7. Système de mesure (1) selon la revendication 6, dans lequel le module de comptage de volume (200) comprend un capteur de température (220) et un capteur de pression (230) étant tous les deux reliés au premier compteur de volume (210).

8. Système de mesure (1) selon la revendication 6 ou 7, dans lequel le module de compteur de volume (200) comprend en outre un deuxième compteur de volume (211), le premier compteur de volume (210) étant adapté pour mesurer un liquide sur une première plage de mesure et le deuxième compteur de volume (211) étant adapté pour mesurer un liquide sur une deuxième plage de mesure.

9. Système de mesure (1) selon l'une quelconque des revendications 6 à 8, dans lequel le module de compteur de volume (200) comprend une unité d'affichage (240) étant adaptée pour fournir une valeur de mesure déterminée par le module de compteur de volume (200).

10. Système de mesure (1) selon l'une quelconque des revendications 6 à 9, dans lequel le système de mesure (1) comprend une structure porteuse (300) qui est reliée mécaniquement à au moins le dégazeur (100).
